# DEMANDE DE BREVET EUROPEEN

(11) **EP 3 836 368 A1**
(43) Date de publication de la demande: **16.06.2021**
(21) Numéro de dépôt: 20209085.8
(22) Date de dépôt: 20.11.2020
(51) Int. Cl.: H02K 5/24, H02K 1/18

(54) **MACHINE ÉLECTRIQUE TOURNANTE COMPORTANT UN ORGANE ÉLASTIQUE**

(30) Priorité: 12.12.2019 FR 1914312
(71) Demandeur: VALEO EQUIPEMENTS ELECTRIQUES MOTEUR, 94046 Créteil Cedex (FR)
(72) Inventeur: REDON, Mathieu, 94046 CRETEIL CEDEX (FR); FAVEROLLE, Pierre, 94046 CRETEIL CEDEX (FR); SAUVIGNET, André, 94046 CRETEIL CEDEX (FR); GROSPEAUD, Maxime, 94046 CRETEIL CEDEX (FR)
(74) Mandataire: Prigent, Pierre

(57) **Abrégé**

Machine électrique tournante pour véhicule automobile, ladite machine (10) comprenant :
- un stator (15),
- un carter (11) entourant un rotor et le stator, le rotor étant en rotation autour d'un axe (X), et
- un organe élastique (40) au moins partiellement formé d'un matériau métallique et comportant des bossages (44), ledit organe élastique étant disposé entre le stator (15) et le carter (11) selon une direction radiale,
- caractérisée en ce qu'au moins un bossage (44) est décalé, selon une direction axiale, par rapport aux autres bossages.

## Description

La présente invention concerne un organe élastique pour une machine électrique tournante équipant un véhicule automobile et une machine électrique tournante comportant un tel organe élastique. L'invention trouve des applications particulièrement avantageuses dans le domaine des alternateurs, des alterno-démarreurs et des machines réversibles.

Un véhicule automobile à moteur thermique est équipé d'un alternateur qui a pour fonction de transformer l'énergie mécanique provenant du moteur en énergie électrique dans le but notamment de recharger la batterie du véhicule et d'alimenter le réseau de bord du véhicule. Pour ce faire, l'alternateur comporte un rotor monté sur un arbre entraîné en rotation et un stator entourant le rotor, le stator étant porté par un carter.

Lorsque l'alternateur est en fonctionnement, le rotor génère un champ magnétique tournant qui agit sur le stator et le fait vibrer. En fonction de la vitesse de rotation de l'alternateur, les vibrations du stator peuvent générer un bruit magnétique qui se manifeste sous la forme d'un sifflement, ce qui provoque une gêne auditive.

Dans le but d'atténuer le bruit magnétique, il est connu, notamment du document EP 1249064 B1, d'insérer entre le stator et le carter des éléments d'amortissement des vibrations tels que des tampons et de la résine. Un inconvénient à cette façon de procéder est que la mise en place de tels éléments d'amortissement nécessite beaucoup de temps. En effet, il faut notamment positionner les tampons, couler la résine et attendre qu'elle polymérise.

Une autre solution, connue du document FR 3 069 724 A1 consiste à positionner un organe élastique entre le carter et le stator, selon une direction radiale, l'organe élastique étant au moins partiellement formé d'un matériau métallique et étant conformé pour présenter une raideur selon les directions radiale et tangentielle, prévue pour filtrer des vibrations du stator. L'organe élastique est une pièce mécanique qui est placée entre le stator et le carter de la machine électrique tournante. Par conséquent, sa mise en place est rapide à mettre en œuvre et ne requiert pas de temps d'attente contrairement au cas de la résine. Cependant, cette solution n'est pas satisfaisante car elle présente le risque d'avoir un basculement du stator dans la structure de l'alternateur, engendrant des efforts magnétiques dans la structure et beaucoup de bruit.

Il est également connu des documents DE 101 42 174 A1, US 2019/199163 A1, US 2013/093273 A1, WO 2014/129062 A1 et EP 2 081 280A1 illustrent l'art antérieur de l'invention.

La présente invention vise à résoudre le problème qui vient d'être mentionné en proposant un moyen d'amortissement des vibrations d'une machine électrique tournante à la fois rapide à installer et remédiant au problème du bruit.

À cet effet, un premier aspect de l'invention concerne une machine électrique tournante pour véhicule automobile. La machine comprend :
- un stator,
- un carter entourant un rotor et le stator, le rotor étant en rotation autour d'un axe, et
- un organe élastique au moins partiellement formé d'un matériau métallique et comportant des bossages, ledit organe élastique étant disposé entre le stator et le carter selon une direction radiale,
- caractérisée en ce qu'au moins un bossage est décalé, selon une direction axiale, par rapport aux autres bossages.

Dans l'ensemble de la description et dans les revendications, les termes « axial », « circonférentiel », « radial », « tangentiel », « intérieur », « extérieur » et leurs dérivés sont définis par rapport à l'axe longitudinal X.

L'organe élastique est une pièce mécanique qui est placée entre le stator et le carter de la machine électrique tournante. Par conséquent, sa mise en place est rapide à mettre en œuvre et ne requiert pas de temps d'attente contrairement au cas de la résine utilisée dans l'art antérieur. L'organe élastique permet d'avoir un appui entre le stator et le carter réparti sur deux plans décalés axialement, favorisant un meilleur maintien du stator dans le carter. La structure est donc plus stable. Un tel organe élastique permet en outre d'obtenir un meilleur positionnement coaxial du stator par rapport à l'axe du rotor, favorisant un meilleur fonctionnement de la machine électrique. Enfin, l'organe élastique permet de filtrer le bruit magnétique selon la direction radiale et tangentielle.

Selon un aspect de l'invention, tous les bossages sont identiques les uns aux autres.

Les bossages s'étendent notamment dans une direction radiale.

Selon un mode de réalisation, chaque bossage présente une hauteur, dans une direction radiale, comprise de préférence entre 0,5 mm et 30 mm.

Selon un mode de réalisation, chaque bossage comporte une surface d'appui qui s'étend axialement.

Par exemple, l'organe élastique s'étend circonférentiellement autour du stator.

Selon un aspect de l'invention, les bossages se répartissent en au moins une première série et une deuxième série décalées selon une direction axiale. Par exemple, les bossages se répartissent selon trois séries décalées axialement les unes par rapport aux autres. Dans un autre exemple, les bossages se répartissent en quatre séries ou plus, décalées axialement les unes par rapport aux autres. Dans un autre exemple, les bossages se répartissent en une pluralité de séries décalées les unes des autres.

Selon un aspect de l'invention, les bossages se répartissent en au moins une première série et une deuxième série décalées circonférentiellement.

Selon un aspect de l'invention, les bossages de la première série sont en regard circonférentiellement partiellement des bossages de la deuxième série.

Selon un aspect de l'invention, un plan perpendiculaire à l'axe du rotor intercepte les bossages de la première série et les bossages de la deuxième série.

La configuration des deux séries de bossages décalées axialement et circonférentiellement, les bossages de la première série étant en regard circonférentiellement partiellement des bossages de la deuxième série, permet de gagner de la place selon la direction axiale tout en conservant un appui entre le stator et le carter réparti sur deux plans décalés axialement permettant le maintien du stator et le filtrage du bruit.

Selon un aspect de l'invention, chaque bossage de la première série est en regard, selon une direction axiale, d'un bossage de la deuxième série.

Selon un aspect de l'invention, les bossages de la première série sont alternés circonférentiellement avec les bossages de la deuxième série.

Selon un aspect de l'invention, les bossages de la première série sont alternés un à un avec les bossages de la deuxième série.

Selon un aspect de l'invention, il y a autant de bossages dans la première série que de bossages dans la deuxième série.

Selon un mode de réalisation, l'organe élastique présente un plan de symétrie, ledit plan de symétrie comprenant l'axe de rotation. De plus, l'organe élastique peut également présenter un deuxième plan de symétrie s'étendant perpendiculairement à l'axe de rotation.

Selon un mode de réalisation, l'organe élastique présente une section transversale par rapport à l'axe, la section transversale étant ouverte. En l'occurrence, le premier plan de symétrie passe par l'ouverture et notamment par le centre dans une direction circonférentielle de ladite ouverture.

Selon un mode de réalisation, l'organe élastique forme un arc de cercle présentant un angle d'au moins 240°.

Selon un mode de réalisation, l'organe élastique comporte une surface interne orientée vers l'axe de référence et une surface externe opposée à la surface interne, la surface externe et/ou la surface interne étant munies de bossages.

Selon un mode de réalisation, l'organe élastique comporte au moins une première ouverture disposée de manière adjacente à au moins un des bossages.

Par exemple, la première ouverture s'étend dans une direction axiale. En variante, la première ouverture s'étend dans une direction circonférentielle.

Par exemple, l'organe élastique comporte deux premières ouvertures disposées de part et d'autre d'un bossage.

Selon un mode de réalisation, l'organe élastique comporte plusieurs premières ouvertures de façon à ce que deux premières ouvertures soient disposées de part et d'autre de chaque bossage.

Selon un mode de réalisation, l'organe élastique comporte au moins une ouverture disposée sur au moins un bossage, dite deuxième ouverture.

Par exemple, la deuxième ouverture s'étend suivant une direction axiale. En variante, la deuxième ouverture s'étend dans une direction circonférentielle.

Par exemple, l'organe élastique comporte une deuxième ouverture disposée de manière à séparer le bossage en deux parties ayant de préférence des dimensions identiques.

Selon une réalisation, l'organe élastique comporte deux deuxièmes ouvertures disposées de manière à séparer le bossage en trois parties ayant de préférence des dimensions identiques.

Selon une réalisation, l'organe élastique comporte une pluralité de deuxièmes ouvertures disposées de manière à séparer chaque bossage en deux parties ayant de préférence des dimensions identiques.

Selon une réalisation, l'organe élastique comporte une pluralité de deuxièmes ouvertures disposées de manière à séparer chaque bossage en trois parties ayant de préférence des dimensions identiques.

Selon une réalisation, l'organe élastique comporte une pluralité de deuxièmes ouvertures disposées de manière à séparer chaque bossage en plusieurs parties ayant de préférence des dimensions identiques.

Selon une réalisation, l'organe élastique comporte au moins une ouverture en regard axialement d'au moins un bossage, dite troisième ouverture.

Selon une réalisation, chaque bossage est associé à au moins une troisième ouverture. Chaque troisième ouverture s'étend dans la même direction que le bossage associé.

Selon une réalisation, les troisièmes ouvertures associées aux bossages de la première série sont disposées axialement d'un côté des bossages tandis que les troisièmes ouvertures associées aux bossages de la deuxième série sont disposées de l'autre côté des bossages. Les troisièmes ouvertures ne sont pas symétriques par rapport à un plan de symétrie.

Par exemple, la troisième ouverture s'étend suivant une direction axiale. En variante, la troisième ouverture s'étend dans une direction circonférentielle.

Selon une réalisation, l'organe élastique comporte autant de troisièmes ouvertures que de premières et/ou deuxièmes ouvertures.

Selon une réalisation, les premières, deuxièmes et troisièmes ouvertures ont la même dimension suivant la direction circonférentielle.

Ces troisièmes ouvertures permettent de faciliter le roulage de l'organe élastique lorsque celui-ci comprend des premières et/ou deuxièmes ouvertures. Sans ces troisièmes ouvertures, la circularité de l'organe élastique est moins bonne et cela peut être gênant lors de l'assemblage.

Selon un mode de réalisation, l'organe élastique présente une épaisseur, dans une direction radiale, comprise entre 0,1 mm et 2 mm.

Selon un mode de réalisation, l'organe élastique présente une épaisseur, dans une direction radiale, comprise entre 0,1 mm et 1 mm.

Selon un mode de réalisation, l'organe élastique présente une épaisseur, dans une direction radiale, comprise entre 0,3 mm et 0,7 mm.

Selon une réalisation, l'organe élastique est formé d'un matériau multicouche. Par « matériau multicouche », on entend que l'organe élastique est formé d'une succession de couches de matériaux différents, ces couches se succédant dans la direction radiale.

Par exemple, l'organe élastique est formé d'au moins deux matériaux différents.

Par exemple, l'organe élastique est formé de trois matériaux différents.

Par exemple, l'organe élastique est formé d'une succession de couches de matériaux différents aux propriétés différentes.

Par exemple, au moins deux couches comportent des raideurs radiales différentes.

Par exemple, au moins une couche est métallique.

Par exemple, au moins une couche est formée d'un composé organique.

Par exemple, une couche formée d'un composé organique a un module d'amortissement plus élevé qu'une couche formée d'un matériau métallique.

Par exemple, une couche de matériau amortisseur est comprise entre deux couches de matériaux métalliques.

Ainsi l'organe élastique permet à la fois de filtrer et d'amortir les vibrations du stator, selon la direction radiale.

Selon un mode réalisation, le stator comporte un corps s'étendant axialement sur une première longueur, l'organe élastique s'étendant axialement sur une deuxième longueur comprise entre 10% et 120% de la première longueur.

Selon un aspect de l'invention, tous les bossages présentent un plan de symétrie normal à l'axe de rotation de la machine.

Selon un aspect de l'invention, les bossages présentent chacun deux extrémités fixes. C'est-à-dire que chaque extrémité est fixée au reste de l'organe élastique. Aucun des bossages ne présente une extrémité libre dont la tenue en fatigue et/ou la précision sont moins performantes.

Selon un aspect de l'invention, la machine électrique comprend une pluralité d'organes élastiques tels que décrit précédemment. Ces organes élastiques peuvent être tous identiques. En variante, les organes élastiques peuvent être différents. Cela permet une filtration diverse des vibrations qui peut être utile dans certaines configurations de machine électriques.

Ces organes élastiques peuvent être distants les uns des autres. Au moins une partie des organes élastiques peuvent être attenant. La multiplicité des organes permet une bonne réparation des efforts, notamment lors du montage de la machine.

Selon un aspect de l'invention, la machine électrique comprend deux organes élastiques.

Selon un mode réalisation, le carter comporte un premier palier dit « palier avant » et un deuxième palier dit « palier arrière », l'organe élastique reliant mécaniquement le stator au palier avant, le palier avant correspondant au palier qui est le plus proche de l'organe d'entraînement de la machine électrique tournante.

L'invention et ses différentes applications seront mieux comprises à la lecture de la description qui suit et à l'examen des figures qui l'accompagnent, parmi lesquelles :
la [Figure 1] est une vue schématique en coupe longitudinale d'un alternateur, selon un mode de réalisation de l'invention ;
la [Figure 2A] est une vue schématique en perspective d'un premier exemple d'organe élastique équipant l'alternateur de la figure 1 ;
la [Figure 2B] est une vue schématique en perspective d'un deuxième exemple d'organe élastique équipant l'alternateur de la figure 1 ;
la [Figure 3] est une vue agrandie des bossages de l'organe élastique des figures 2a et 2b ;
la [Figure 4A] montre une première variante de réalisation des bossages de la figure 3 ;
la [Figure 4B] montre une deuxième variante de réalisation des bossages de la figure 3 ;
la [Figure 5] montre une troisième variante de réalisation des bossages de la figure 3 ;
la [Figure 6] est une vue en perspective, avant roulage, d'un troisième exemple de réalisation d'un organe élastique selon l'invention ;
la [Figure 7] montre une quatrième variante de réalisation des bossages de la figure 3.

Les figures ne sont présentées qu'à titre indicatif et nullement limitatif de l'invention.

Pour plus de clarté, les éléments identiques ou similaires sont repérés par des signes de référence identiques sur toutes les figures.

Un véhicule automobile à moteur thermique est équipé d'une machine électrique tournante, telle qu'un alternateur ou un alterno-démarreur, configurée pour transformer l'énergie mécanique provenant du moteur thermique en énergie électrique dans le but notamment de recharger la batterie du véhicule et d'alimenter électriquement le réseau de bord du véhicule.

Un alterno-démarreur est un alternateur réversible, c'est-à-dire qu'il présente également un mode de fonctionnement dans lequel il transforme de l'énergie électrique en énergie mécanique pour notamment démarrer le moteur thermique du véhicule automobile. Dans ce cas, la machine tournante se comporte comme un moteur électrique.

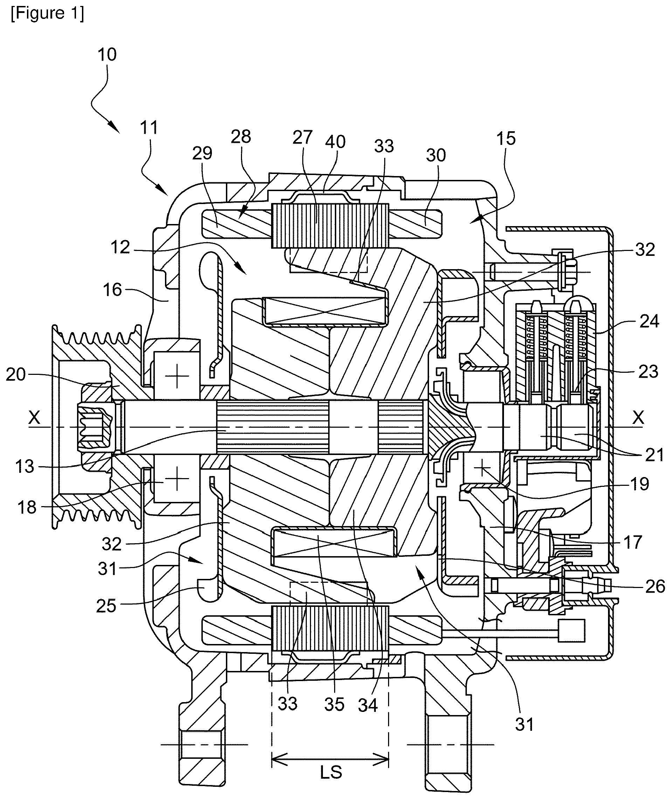

Un mode de réalisation d'un alternateur 10 selon l'invention va maintenant être décrit, en référence à la figure 1. L'alternateur 10 comporte un rotor 12 monté solidaire en rotation sur un arbre 13 et un stator 15 entourant le rotor 12. Le rotor 12 et le stator 15 sont disposés à l'intérieur d'un carter 11 comprenant un palier avant 16 et un palier arrière 17.

L'arbre 13 s'étend selon un axe longitudinal X et est entraîné en rotation par le moteur via un dispositif de transmission de mouvement comprenant une poulie 20 fixée à une extrémité avant de l'arbre 13. L'axe longitudinal X de l'arbre 13 forme l'axe de rotation du rotor 12.

Dans l'ensemble de la description et dans les revendications, les termes « axial », « circonférentiel », « radial », « tangentiel », « intérieur », « extérieur » et leurs dérivés sont définis par rapport à l'axe longitudinal X.

Le stator 15 comporte un corps 27 formé d'un empilement de tôles ayant chacune une forme générale annulaire. Des encoches sont ménagées à la périphérie interne de chaque tôle. Les encoches des tôles empilées forment des rainures dans lesquelles des fils électriquement conducteurs sont enroulés de manière à former des bobines d'induit 28. Les bobines 28 définissent des phases électriques, chaque phase comprenant au moins une bobine. Les bobines 28 forment un chignon avant 29 et un chignon arrière 30 disposés axialement de part et d'autre du corps 27 du stator 15.

Le corps 27 du stator 15 présente une forme générale cylindrique annulaire délimitée par une face avant disposée en regard du palier avant 16, une face arrière disposée en regard du palier arrière 17, une surface cylindrique interne et une surface cylindrique externe. Les faces avant et arrière du corps 27 du stator 15 sont transversales par rapport à l'axe longitudinal X.

Le rotor 12 comporte deux roues polaires 31 comprenant chacune un flasque 32 disposé transversalement par rapport à l'axe longitudinal X et muni de griffes 33 s'étendant axialement en périphérie du flasque. Les griffes 33 de l'une des roues polaires 31 sont angulairement décalées par rapport aux griffes 33 de l'autre roue polaire 31 de manière à ce que les griffes 43 des deux roues polaires 31 s'entre-pénètrent alternativement. Un noyau cylindrique 34 est intercalé axialement entre les flasques 32 des roues polaires 31. En l'occurrence, le noyau 34 est constitué de deux demi-noyaux appartenant chacun à l'un des flasques 32. Ce noyau 34 porte à sa périphérie externe une bobine d'excitation 35 enroulée dans un isolant intercalé radialement entre le noyau 34 et la bobine d'excitation 35.

Les paliers 16, 17 sont chacun équipés d'un roulement à billes 18, 19 pour le montage à rotation de l'arbre 13. Le palier arrière 17 est équipé d'un porte-balais 24 muni de balais 23 agencés pour frotter sur des bagues collectrices 21 connectées électriquement à la bobine d'excitation 35 du rotor 12. La bobine d'excitation 35 peut ainsi être alimentée par un courant électrique d'excitation provenant d'un régulateur de tension. Les bagues collectrices 21 sont disposées sur l'extrémité arrière de l'arbre 13.

Le refroidissement de l'alternateur 10 est assuré par une circulation d'air générée par deux ventilateurs 25, 26 disposés respectivement sur la face avant et sur la face arrière du rotor 12.

L'alternateur 10 comporte un organe élastique 40 disposé entre le stator 15 et le carter 11. Selon le mode de réalisation de la figure 1, l'organe élastique 40 est disposé entre le stator 15 et un seul palier, en l'occurrence le palier avant 16, afin de faciliter l'assemblage. Selon d'autres modes de réalisation, l'organe élastique peut relier mécaniquement le stator au palier arrière ou aux deux paliers à la fois. L'organe élastique 40 est conformé pour filtrer les vibrations du stator 15 résultant des forces électromagnétiques en présence dans l'alternateur 10 lorsqu'il est en fonctionnement. Ainsi, l'organe élastique 40 limite la propagation des vibrations du stator 15 vers le carter 11 de l'alternateur 10 de manière à réduire le bruit magnétique de l'alternateur 10.

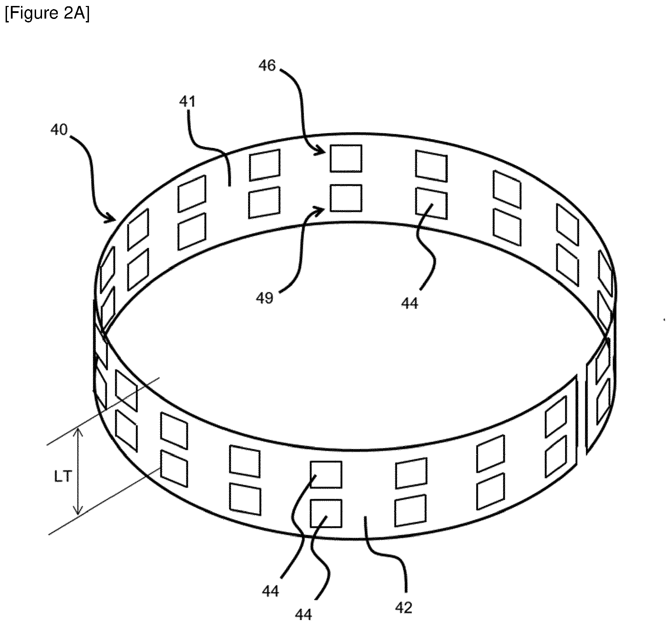

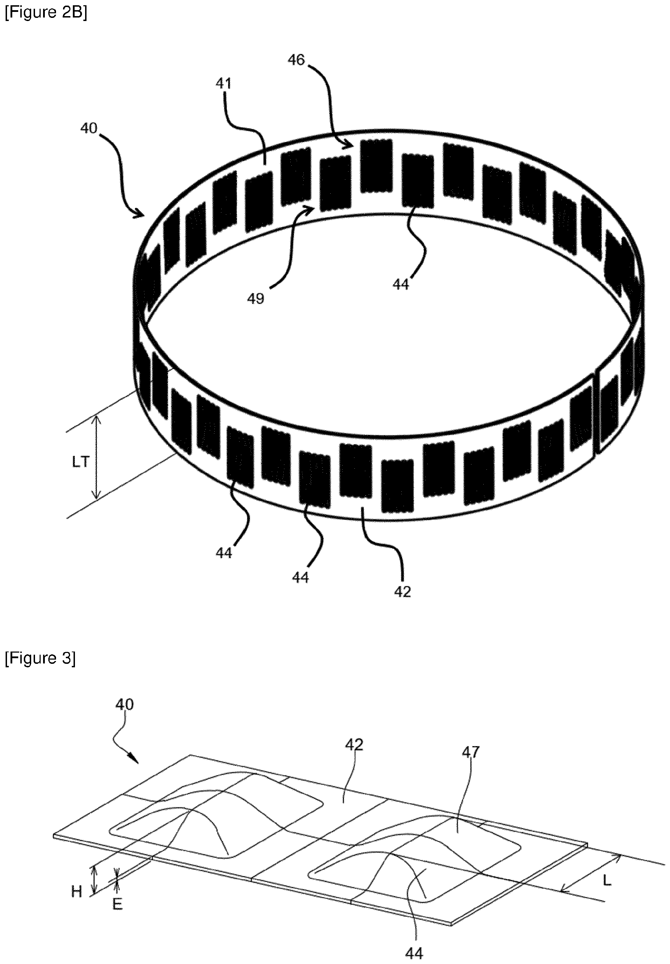

L'organe élastique 40 se présente par exemple sous la forme d'une bague de tolérance, comme illustré aux figures 2A et 2B. Dans ces cas, l'organe élastique 40 est monté autour de la surface cylindrique externe du corps 27 du stator 15. L'organe élastique 40 comporte une surface interne 41 disposée en regard de, et de préférence au contact de la surface cylindrique externe du corps 27 du stator 15, et une surface externe 42 opposée à la surface interne 41.

Comme représenté schématiquement aux figures 2A et 2B, l'organe élastique 40 comporte des bossages 44 s'étendant radialement extérieurement sur la surface externe 42. Inversement, la surface interne 41 est munie de creux 45 ayant une forme complémentaire aux bossages 44. Les bossages 44 agissent en tant qu'éléments élastiques entre le stator 15 et le carter 11. Les bossages 44 de l'organe élastique 40 sont mieux visibles sur la figure 3.

Selon un autre mode de réalisation, les bossages peuvent être inversés, c'est-à-dire être ménagés sur la surface périphérique interne 41.

Selon un exemple de réalisation représenté à la figure 2A, les bossages 44 se répartissent en une première série 46 et une deuxième série 49 décalées selon une direction axiale, chaque bossage de la première série étant en regard, selon une direction axiale, d'un bossage de la deuxième série. Dans cette configuration, il y a autant de bossages 44 dans la première série 46 que de bossages 44 dans la deuxième série 49.

Selon un autre exemple de réalisation représenté à la figure 2B, les bossages 44 se répartissent en une première série 46 et une deuxième série 49 décalées axialement et circonférentiellement. Les bossages 44 de la première série 46 sont en regard circonférentiellement partiellement des bossages 44 de la deuxième série 49. Un plan perpendiculaire à l'axe du rotor X intercepte les bossages 44 de la première série 46 et les bossages 44 de la deuxième série 49. Les bossages 44 de la première série 46 sont alternés circonférentiellement avec les bossages 44 de la deuxième série 49. En particulier, dans cet exemple de réalisation, les bossages 44 de la première série 46 sont alternés un à un avec les bossages 44 de la deuxième série 49. Cette configuration des deux séries de bossages 44 permet de gagner de la place selon la direction axiale tout en ayant un excellent maintien du stator 15 et un bruit filtré.

Lorsque le stator 15 est assemblé dans le carter 11, les bossages 44 de l'organe élastique 40 sont au moins partiellement déformés afin d'exercer un effort radial sur le stator 15 et sur le carter 11 de manière à empêcher le stator 15 de se déplacer axialement et/ou radialement et/ou en rotation par rapport au carter 11. Les bossages 44 de l'organe élastique 40 permettent donc de maintenir en position le stator 15 dans le carter 11.

L'organe élastique 40 s'étend axialement sur une longueur totale LT comprise de préférence entre 10% et 120% de la longueur LS du corps 27 du stator 15. Ainsi, l'organe élastique peut s'étendre sur une longueur axiale inférieure à celle du corps de stator ou, en variante, s'étendre sur une longueur supérieure à celle du corps de stator. L'organe élastique 40 présente une épaisseur E, dans une direction radiale, comprise de préférence entre 0,1 mm et 1 mm.

Chaque bossage 44 comporte une surface d'appui 47 disposée en contact avec le carter 11 si les bossages sont disposés sur une face circonférentielle externe de l'organe élastique ou en contact avec le corps 27 du stator si les bossages sont disposés sur une face circonférentielle interne dudit organe. Dans une variante de réalisation, l'organe élastique peut comporter des bossages situés respectivement sur les faces interne et externe dudit organe. La disposition des bossages sur une face ou l'autre peut dépendre du procédé d'assemblage de l'alternateur dans le sens où la surface d'appui 47 est notamment en contact avec la pièce (carter ou stator) mobile lors du montage du stator dans le carter. L'organe élastique est donc notamment monté, avant l'assemblage entre le stator et le carter, sur la pièce immobile lors de cet assemblage.

La surface d'appui 47 de chaque bossage 44 s'étend axialement sur une longueur L comprise de préférence entre 20% et 110% de la longueur LS du corps 27 du stator 15. Chaque bossage 44 présente une hauteur H, considérée selon une direction radiale entre la surface interne 41 et la surface d'appui 27, comprise de préférence entre 0,5 mm et 30 mm. De plus, chaque bossage 44 présente par exemple une largeur, dans une direction circonférentielle, comprise de préférence entre 0,2 mm et 30 mm.

Par exemple, les bossages d'un même organe élastique 40 sont tous identiques le long de la circonférence dudit organe. Toujours par exemple, les bossages peuvent être régulièrement répartis le long de la circonférence de l'organe élastique ou non régulièrement répartis. Par exemple des groupes de plusieurs bossages peuvent être régulièrement répartis les uns des autres.

L'organe élastique 40 présente une section transversale par rapport à l'axe X qui est ouverte. Autrement dit, l'organe élastique 40 n'est pas un anneau fermé. De préférence, l'organe élastique 40 est tel qu'il couvre un angle d'au moins 240° ce qui permet d'assurer le centrage du stator 15 par rapport au carter 11.

L'organe élastique 40 peut être réalisé en métal tel que de l'acier ou de l'aluminium. Un avantage à utiliser du métal est d'obtenir une bonne conduction thermique entre le stator 15 et le carter 11 de manière à évacuer la chaleur résultant de la génération du courant induit dans le stator.

Selon des variantes de réalisation, l'organe élastique 40 peut comporter des premières ouvertures 48 disposées de part et d'autre de chaque bossage 44. En variante, l'organe élastique 40 peut comporter une deuxième ouverture 52 par bossage 44, par exemple disposée au milieu du bossage. Dans une autre variante, un bossage 44 peut être formé de plusieurs bandes espacées par des premières et/ou deuxièmes ouvertures.

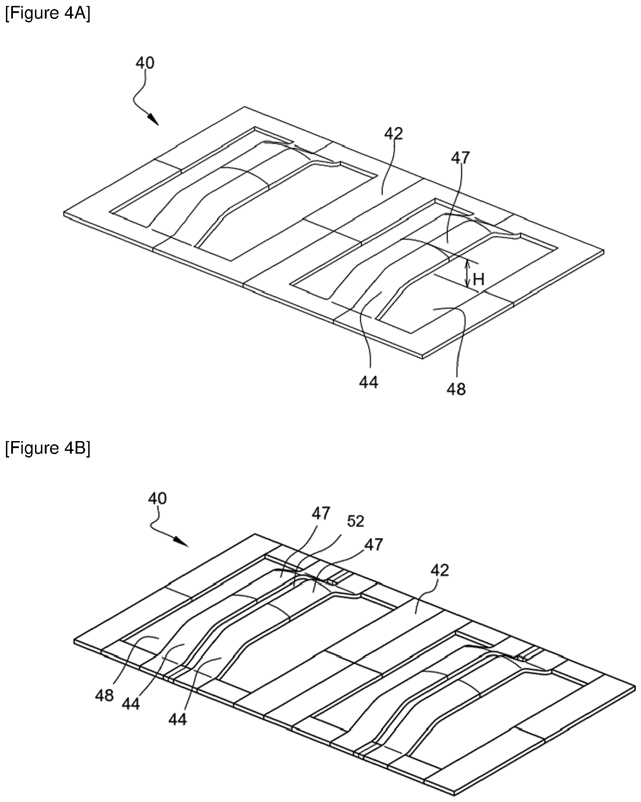

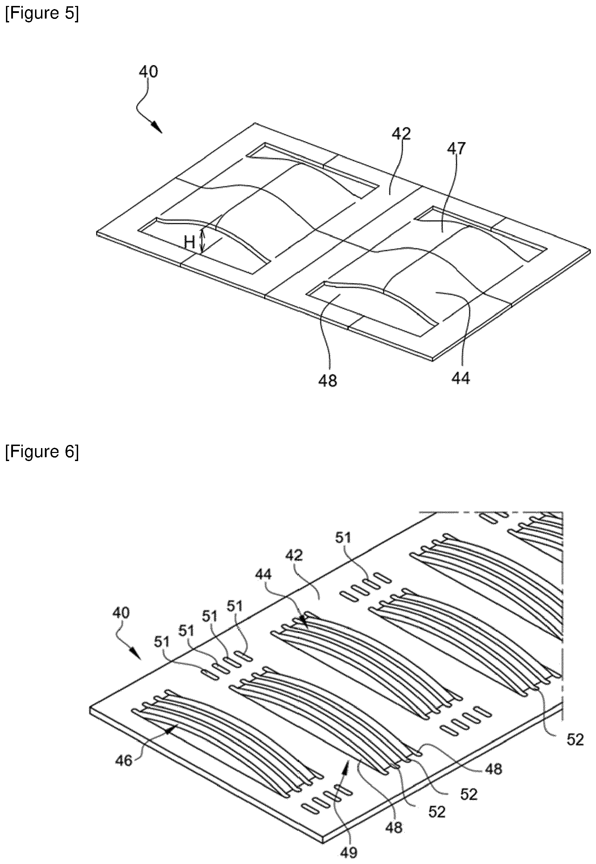

Les premières ouvertures 48 peuvent s'étendre axialement comme illustré à la figure 4A, ou tangentiellement comme illustré à la figure 5. Éventuellement, chaque bossage 44 peut comporter une deuxième ouverture 52, comme représentée à la figure 4B, réalisée de manière à séparer le bossage 44 en deux parties ayant de préférence des dimensions identiques. Les différentes ouvertures que comporte l'organe élastique 40, ainsi que leurs dimensions, sont adaptées pour ajuster la raideur des bossages 44, notamment selon la direction radiale, de manière à ce que l'organe élastique 40 soit suffisamment rigide pour maintenir en position le stator 15 dans le carter 11 tout en étant suffisamment souple pour filtrer les vibrations.

Selon des variantes de réalisation, l'organe élastique 40 peut comporter des troisièmes ouvertures 51 disposées en regard axialement de chaque bossage 44. La figure 6 illustre une vue en perspective, avant roulage, d'un troisième exemple de réalisation d'un organe élastique selon l'invention. Dans cet exemple, l'organe élastique 40 peut comporter autant de troisièmes ouvertures 51, en regard axialement d'un bossage, que le bossage comporte de premières ouvertures 48 et de deuxièmes ouvertures 52. Dans l'exemple illustré, les premières, deuxièmes et troisièmes ouvertures ont une dimension identique selon la direction circonférentielle.

Ces troisièmes ouvertures 51 permettent de faciliter le roulage de l'organe élastique lorsque celui-ci comprend des premières ouvertures 48 et/ou deuxièmes ouvertures 52. La circularité de l'organe élastique serait moins bonne sans les troisièmes ouvertures 51 ; ce qui peut être gênant lors de l'assemblage.

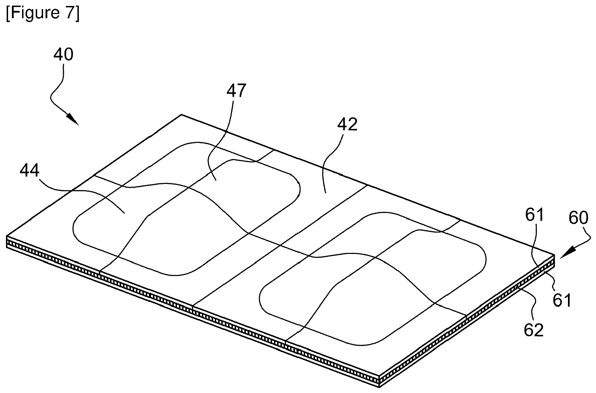

Selon des variantes de réalisation, l'organe élastique 40 peut être formé d'un matériau multicouche 60. Par « matériau multicouche », on entend que l'organe élastique est formé d'une succession de couches de matériaux différents, ces couches se succédant dans la direction radiale. Dans l'exemple illustré à la figure 7, l'organe élastique comporte des bossages 44 et est formé de trois couches 61, 62, 61. Les couches supérieure et inférieure 61 sont formées d'un matériau métallique, et la couche intermédiaire 62 est formée d'un composé organique.

Les couches métalliques peuvent être réalisées en acier, aluminium, cuivre, laiton ou autre. La couche intermédiaire peut être réalisée en caoutchouc, mousses polymères ou autres.

La couche intermédiaire, formée d'un composé organique, a un module d'amortissement plus élevé que les deux couches formées d'un matériau métallique. Ainsi l'organe élastique permet à la fois de filtrer et d'amortir les vibrations du stator, selon la direction radiale.

Naturellement, l'invention n'est pas limitée aux modes de réalisation décrits en référence aux figures et des variantes pourraient être envisagées sans sortir du cadre de l'invention.

## Revendications

1. Machine électrique tournante pour véhicule automobile, ladite machine (10) comprenant :
- un stator (15),
- un carter (11) entourant un rotor et le stator, le rotor étant en rotation autour d'un axe (X), et
- un organe élastique (40) au moins partiellement formé d'un matériau métallique et comportant des bossages (44), ledit organe élastique étant disposé entre le stator (15) et le carter (11) selon une direction radiale,
- **caractérisée en ce qu'**au moins un bossage (44) est décalé, selon une direction axiale, par rapport aux autres bossages.

2. Machine électrique tournante selon la revendication 1, **caractérisée en ce que** les bossages se répartissent en au moins une première série (46) et une deuxième série (49) décalées selon une direction axiale.

3. Machine électrique tournante selon l'une quelconque des revendications précédentes, **caractérisée en ce que** les bossages se répartissent en au moins une première série (46) et une deuxième série (49) décalées circonférentiellement.

4. Machine électrique tournante selon la revendication 3 quand dépendante de la 2, **caractérisée en ce que** les bossages de la première série (46) sont en regard circonférentiellement partiellement des bossages de la deuxième série (49).

5. Machine électrique tournante selon la revendication 2, **caractérisée en ce que** chaque bossage (44) de la première série (46) est en regard, selon une direction axiale, d'un bossage de la deuxième série (49).

6. Machine électrique tournante selon l'une quelconque des revendications 3 ou 4, **caractérisée en ce que** les bossages (44) de la première série (46) sont alternés circonférentiellement avec les bossages (44) de la deuxième série (49).

7. Machine électrique tournante selon la revendication précédente, **caractérisée en ce que** les bossages (44) de la première série (46) sont alternés un à un avec les bossages de la deuxième série (49).

8. Machine électrique tournante selon l'une quelconque des revendications précédentes, **caractérisée en ce que** l'organe élastique (40) comporte au moins une première ouverture (48) disposée de manière adjacente à au moins un des bossages (44) et **en ce que** l'organe élastique (40) comporte plusieurs premières ouvertures (48) de façon à ce que deux premières ouvertures soient disposées de part et d'autre de chaque bossage (44).

9. Machine électrique tournante selon l'une quelconque des revendications précédentes, **caractérisée en ce que** l'organe élastique (40) comporte au moins une ouverture disposée sur au moins un bossage (44), dite deuxième ouverture (52).

10. Machine électrique tournante selon l'une quelconque des revendications précédentes, **caractérisée en ce que** l'organe élastique (40) comporte au moins une ouverture (51) en regard axialement d'au moins un bossage, dite troisième ouverture (51).

11. Machine électrique tournante selon la revendication 10, **caractérisée en ce que** l'organe élastique (40) comporte autant de troisièmes ouvertures (51) que de premières ouvertures (48) et/ou deuxièmes ouvertures (52).
